# EUROPÄISCHE PATENTANMELDUNG

(11) **EP 3 696 000 A1**
(43) Veröffentlichungstag der Anmeldung: **19.08.2020**
(21) Anmeldenummer: 19157540.6
(22) Anmeldetag: 15.02.2019
(51) Int. Cl.: B60H 1/00, B62D 33/04, B60P 3/20

(54) **KOFFERAUFBAU EINES NUTZFAHRZEUGS**

(71) Anmelder: Schmitz Cargobull AG, 48341 Altenberge (DE)
(72) Erfinder: Kuhn, Marco, 48691 Vreden (DE)
(74) Vertreter: Cohausz & Florack

(57) **Zusammenfassung**

Die Erfindung betrifft einen Kofferaufbau eines Nutzfahrzeugs (1), der mit einem Dach (12), zwei Längsseitenwänden (6,7), einer Stirnwand (8) und einer Rückwand (9) einen Laderaum (11) umgrenzt. An dem Kofferaufbau (5) ist eine Transportkältemaschine (14) vorgesehen, die über eine Ausblasöffnung (16) temperierte Luft in den Laderaum (11) bläst. Dabei sind an der dem Laderaum (11) zugeordneten Unterseite (15) des Dachs (12) mindestens zwei Luftleitkanäle (18,19,20) angeordnet, deren Eintrittsöffnungen (21,22,23) der Transportkältemaschine (14) zugeordnet sind und deren Austrittsöffnung (25,26,27) in Längsrichtung des Laderaums (11) in einem Abstand (B,C,D) entfernt von der Transportkältemaschine (14) angeordnet sind, um temperierte Luft in einen von der Ausblasöffnung der Transportkältemaschine (14) entfernten Bereich (28) des Laderaums (11) zu leiten. Um bei einem solchen Kofferaufbau eine optimierte Durchmischung der im Kofferaufbau vorhandenen Atmosphäre mit der von der Transportkältemaschine eingeblasenen temperierten Luft zu gewährleisten, ist ausgehend von einem ersten Luftleitkanal (18), dessen Austrittsöffnung (25) den größten Abstand (B) zur Ausblasöffnung (16) der Transportkältemaschine (14) hat, bei jedem in Richtung einer ersten der Längsseitenwände (6,7) zu einem der Luftleitkanäle (18,19,20) benachbart angeordneten Luftleitkanal (19,20) die Austrittsöffnung (26,27) jeweils in einem kürzeren Abstand (C,D) zur Ausblasöffnung (16) der Transportkältemaschine (14) angeordnet, als die Austrittsöffnung (25,26) des in Richtung der zweiten Längsseitenwand (6) zu ihm benachbarten Luftleitkanals (18,19).

## Beschreibung

Die Erfindung betrifft einen Kofferaufbau eines Nutzfahrzeugs. Ein solcher Kofferaufbau umfasst üblicherweise ein Dach, zwei das Dach tragende, sich in Längsrichtung des Kofferaufbaus erstreckende Längsseitenwände, eine die Längsseitenwände in einem Stirnseitenbereich des Kofferaufbaus verbindende Stirnwand und eine die Längsseitenwände an einem Rückseitenbereich des Kofferaufbaus verbindende Rückwand. Mit seinem Dach, seinen Längsseitenwänden, seiner Stirnwand und seiner Rückwand umgrenzt der üblicherweise auf einem von einem Chassis getragene Boden des Nutzfahrzeugs errichtete Kofferaufbau einen Laderaum, der das jeweilige Transportgut aufnimmt. Dabei ist an einem Kofferaufbau der hier in Rede stehenden Art eine Transportkältemaschine vorgesehen, die über eine Ausblasöffnung temperierte Luft in den Laderaum bläst. Gleichzeitig sind an der dem Laderaum zugeordneten Unterseite des Dachs mindestens zwei Luftleitkanäle angeordnet, deren Eintrittsöffnungen der Transportkältemaschine zugeordnet sind und deren Austrittsöffnung in Längsrichtung des Laderaums in einem Abstand entfernt von der Transportkältemaschine angeordnet sind, um temperierte Luft in einen von der Ausblasöffnung der Transportkältemaschine entfernten Bereich des Laderaums zu leiten.

Bei Nutzfahrzeugen der hier in Rede stehenden Art handelt es sich um Lastkraftwagen, Anhänger oder Sattelauflieger und desgleichen, die unabhängig von ihrer Ausgestaltung für den Transport von Gütern im Straßenverkehr bestimmt sind. Nutzfahrzeuge mit Kofferaufbauten kommen dabei zum Einsatz, wenn das zu transportierende Gut in besonderer Weise gegenüber Einflüssen aus der Umgebung geschützt werden muss.

Der Kofferaufbau, der aus stabilen Dach-, Längsseitenwand-, Stirnwand- und Rückwandelementen zusammengesetzt ist, schirmt das Transportgut gegen Temperaturschwankungen, Feuchtigkeit oder sonstige äußere Gegebenheiten ab, durch die das Transportgut beschädigt oder in seiner Qualität beeinflusst werden könnte. Von besonderer Bedeutung sind dabei solche Kofferaufbauten, die mit einer Transportkältemaschine ausgestattet sind, um die im vom Kofferaufbau umgrenzten Laderaum vorhandene Atmosphäre auf einem bestimmten Temperaturniveau zu halten. So werden Kofferaufbauten, an denen eine Transportkältemaschine vorgesehen ist, beispielsweise zum Transport von Tiefkühlkost oder von Frischwaren eingesetzt, die während des Transports zwingend auf einem bestimmten niedrigen Temperaturniveau gehalten werden müssen. Genauso werden Kofferaufbauten mit einer Transportkältemaschine aber auch zum Transport von Waren verwendet, die zwar nicht speziell gekühlt, jedoch bei einer gleichmäßigen Temperatur gehalten werden müssen. In diesem Fall ist die Transportkältemaschine so eingerichtet, dass sie bedarfsweise nicht nur gekühlte, sondern auch erwärmte Luft in den Laderaum bläst.

Der von einem Nutzfahrzeug-Kofferaufbau umschlossene Laderaum weist in der Regel eine längliche, quaderförmige Gestalt auf, deren Stirnwand in normaler Vorwärtsfahrtrichtung des Fahrzeugs gesehen vorne und deren Rückwand am gegenüberliegenden rückwärtigen Ende des Fahrzeugs angeordnet ist. Üblicherweise ist dabei an der Rückwand eine Türanlage vorgesehen, über die die Beladung des Laderaums mit dem Transportgut erfolgt.

Um sicherzustellen, dass sich die in den Laderaum von der Transportkältemaschine eingeblasene Luft über das gesamte Volumen des Laderaums optimal verteilt, sind üblicherweise an dem Dach des Kofferaufbaus innerhalb des Laderaums Luftleitkanäle angeordnet, die den von der Transportkältemaschine temperierten Luftstrom auch in von der Ausblasöffnung der Transportkältemaschine entfernte Bereiche des Laderaums leiten. Diese Funktion ist insbesondere dann von besonderer Bedeutung, wenn, wie bei der überwiegenden Zahl von in der Praxis im Einsatz befindlichen Kofferaufbauten üblich, die Transportkältemaschine mit ihrer Ausblasöffnung an der Stirnwand des Kofferaufbaus angeordnet ist.

Kofferaufbauten, bei denen Luftleiteinrichtungen der voranstehend erläuterten Art vorgesehen sind, sind beispielsweise in der DE 10 2006 057 599 B4, der EP 1 122 191 B1 oder der WO 2014/115024 A1 beschrieben.

Vor dem Hintergrund des Standes der Technik hat sich die Aufgabe gestellt, einen Kofferaufbau zu schaffen, bei dem eine optimierte Durchmischung der im Kofferaufbau vorhandenen Atmosphäre mit der von der Transportkältemaschine eingeblasenen temperierten Luft gewährleistet ist.

Die Erfindung hat diese Aufgabe durch den Kofferaufbau gelöst, der mindestens die in Anspruch 1 angegebenen Merkmale besitzt.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßer Kofferaufbau eines Nutzfahrzeugs umgrenzt somit in Übereinstimmung mit dem eingangs erläuterten Stand der Technik mit seinem Dach, seinen zwei das Dach tragenden, sich in Längsrichtung des Kofferaufbaus erstreckenden Längsseitenwänden, seiner die Längsseitenwände in einem Stirnseitenbereich des Kofferaufbaus verbindenden Stirnwand und seiner die Längsseitenwände an einem Rückseitenbereich des Kofferaufbaus verbindenden Rückwand einen Laderaum, wobei an dem Kofferaufbau eine Transportkältemaschine vorgesehen ist, die über eine Ausblasöffnung temperierte Luft in den Laderaum bläst, und wobei an der dem Laderaum zugeordneten Unterseite des Dachs mindestens zwei Luftleitkanäle angeordnet sind, deren Eintrittsöffnungen der Transportkältemaschine zugeordnet sind und deren Austrittsöffnung in Längsrichtung des Laderaums in einem Abstand entfernt von der Transportkältemaschine angeordnet sind, um temperierte Luft in einen von der Ausblasöffnung der Transportkältemaschine entfernten Bereich des Laderaums zu leiten.

Erfindungsgemäß ist nun bei einem solchen Kofferaufbau ausgehend von einem ersten Luftleitkanal, dessen Austrittsöffnung den größten Abstand zur Ausblasöffnung der Transportkältemaschine hat, bei jedem in Richtung einer ersten der Längsseitenwände zu einem der Luftleitkanäle benachbart angeordneten Luftleitkanal die Austrittsöffnung jeweils in einem kürzeren Abstand zur Ausblasöffnung der Transportkältemaschine angeordnet als die Austrittsöffnung des in Richtung der zweiten Längsseitenwand des Kofferaufbaus zu ihm benachbarten Luftleitkanals.

Bei einem erfindungsgemäßen Kofferaufbau sind also die Abstände der Austrittsöffnungen der Luftleitkanäle ausgehend von dem Luftleitkanal mit dem größten Abstand zwischen seiner Austrittsöffnung und der Ausblasöffnung der Transportkältemaschine in Richtung der Ausblasöffnung der Transportkältemaschine derart abgestuft, dass bei Draufsicht auf die Unterseite des Dachs des Kofferaufbaus die Anordnung der Luftleitkanäle der Anordnung der tonerzeugenden Röhren einer Panflöte gleicht, deren Länge ausgehend von dem am einen seitlichen Rand der Flöte angeordneten Rohr, mit welchem der tiefste Ton erzeugt wird, in Richtung des anderen seitlichen Rands der Flöte stufenweise bis zum kürzesten Rohr abnimmt, mit welchem der höchste Ton erzeugt wird.

Durch die erfindungsgemäß abgestufte Länge leitet der erste Luftleitkanal, der den größten Abstand zwischen seiner Austrittsöffnung und der Ausblasöffnung der Transportkältemaschine besitzt, temperierte Luft in den von der Ausblasöffnung am weitesten entfernten Bereich des Laderaums, der zu ihm in Richtung der anderen Längsseitenwand nächstbenachbarte zweite Luftleitkanal temperierte Luft in einen Bereich des Laderaums, der einen kürzeren Abstand zur Ausblasöffnung der Transportkältemaschine hat, der zu diesem zweiten Luftleitkanal in Richtung der zweiten Längsseitenwand nächstbenachbarte dritte Luftleitkanal temperierte Luft in einen Bereich des Laderaums, der einen noch kürzeren Abstand zur Ausblasöffnung der Transportkältemaschine hat, und so fort. Die in den unterschiedlich zur Ausblasöffnung der Transportkältemaschine entfernten Bereich des Laderaums eingeblasenen Luftströme bilden jeweils eine Luftwalze, die zurück in Richtung der Transportkältemaschine gerichtet ist. Dabei unterstützt die rückströmende Luftbewegung des aus dem zur ersten Längsseitenwand benachbart angeordneten Luftleitkanal mit dem größten Abstand zwischen der Ausblasöffnung der Transportkältemaschine und seiner Austrittsöffnung austretenden Luftstroms die Rückströmbewegung des aus dem zu ihm in Richtung der zweiten Längsseitenwand nächstbenachbart angeordneten Luftleitkanal ausströmenden Luftstroms, durch dessen Rückströmbewegung wiederum die Rückströmbewegung des Luftstroms unterstützt wird, der aus der zu ihm in Richtung der zweiten Längsseitenwand nächstbenachbarten Luftleitkanal austritt, und so fort. Im Ergebnis wird durch die erfindungsgemäße Ausgestaltung und Anordnung der Luftleitkanäle im Laderaum eine kontrollierte Luftströmung erzeugt, die für eine intensive Durchmischung der im Laderaum herrschenden Atmosphäre mit der neu zugeführten temperierten Luft sorgt und auf diese Weise die Gefahr der Entstehung von Totzonen, in denen kein Luftaustausch stattfindet, auf ein Minimum reduziert.

Eine besonders wirksame Luftverteilung stellt sich dabei ein, wenn der Luftleitkanal mit dem größten Abstand seiner Austritsöffnung zur Ausblasöffnung der Transportkältemaschine nächstbenachbart zu einer der Längsseitenwände angeordnet ist.

Besonders vorteilhaft erweist sich dabei die durch die erfindungsgemäße Gestaltung eines Kofferaufbaus erzielte Luftführung dann, wenn die an einem erfindungsgemäßen Kofferaufbau vorgesehene Transportkältemaschine nicht nur temperierte Luft in den Laderaum einbläst, sondern sie auch aus dem Laderaum absaugt, wobei die zum Absaugen und Einblasen erforderlichen Öffnungen der Transportkältemaschine in an sich bekannter Weise in enger Nachbarschaft zueinander beispielsweise an einer der Wandflächen des Kofferaufbaus angeordnet sind. Insbesondere dann, wenn dabei die Ausblasöffnung in einem geringeren Abstand zum Dach des Kofferaufbaus angeordnet ist als die Absaugöffnung, ergibt sich bei der erfindungsgemäßen Gestaltung in dem Kofferaufbau eine Luftströmung, die das gesamte Volumen des Laderaums über dessen Länge, Breite und Höhe erfasst.

Üblicherweise ist die Ausblasöffnung und die gegebenenfalls zusätzlich vorhandene Absaugöffnung der Transportkältemaschine in eine der ebenen Wandflächen des Kofferaufbaus eingebracht, während die Transportkältemaschine selbst außerhalb des Kofferaufbaus an einer von dessen Außenflächen, insbesondere an der Außenfläche der Stirnwand, befestigt ist. Insbesondere bei einer solchen Anordnung der Ausblasöffnung der Transportkältemaschine ergeben sich optimale Luftströmungen in den Luftleitkanälen, wenn der Abstand der Eintrittsöffnungen der Luftleitkanäle zur Ausblasöffnung der Transportkältemaschine für alle Luftleitkanäle gleich ist. Dabei kann zwischen der Ausblasöffnung und den Eintrittsöffnungen der Luftleitkanäle eine nach Art einer Lufthutze oder desgleichen ausgebildete Luftleiteinrichtung vorgesehen sein, um eine gezielte, insbesondere gleichmäßige, Aufteilung des von der Transportkältemaschine ausgeblasenen Gesamtvolumenstroms an temperierter Luft auf die Luftleitkanäle zu gewährleisten.

Ebenso kann es zur Vergleichmäßigung der Strömungsverhältnisse im Laderaum des erfindungsgemäßen Kofferaufbaus beitragen, wenn der Abstand der Austrittsöffnungen der Luftleitkanäle von der Ausblasöffnung der Transportkältemaschine in einer gleichmäßigen Stufung abnimmt. Auf diese Weise lässt sich eine gleichmäßige Verteilung der in den Laderaum eingeblasenen TeilLuftströme bewirken. Jedoch kann es abhängig von der Gestalt des Transportguts und des durch dessen Gestalt bedingten Strömungshindernisses auch zweckmäßig sein, die Position des Austritts des jeweiligen Luftleitkanals so zu wählen, dass das Transportgut sicher von einer ausreichenden Luftmenge umströmt wird. Entscheidend bleibt dabei jedoch die durch die erfindungsgemäße Abstufung der Abstände zwischen den Austrittsöffnungen der Luftleitkanäle und der Ausblasöffnung der Transportkältemaschine erzwungene walzenartig zur Ausblasöffnung zurückgerichtete Luftströmung.

Für die Praxis besonders relevant ist eine Ausgestaltung der Erfindung, bei dem in einem erfindungsgemäßen Kofferaufbau drei Luftleitkanäle vorgesehen sind, von denen der erste Luftleitkanal den größten Abstand zwischen seiner Austrittsöffnung und der Ausblasöffnung der Transportkältemaschine, der nächstbenachbart zur zweiten Längsseitenwand angeordnete zweite Luftleitkanal den kürzesten Abstand zwischen seiner Austrittsöffnung und der Ausblasöffnung der Transportkältemaschine und der zwischen dem ersten Luftleitkanal und dem zweiten Luftleitkanal angeordnete dritte Luftleitkanal einen Abstand zwischen seiner Austrittsöffnung und der Ausblasöffnung der Transportkältemaschine aufweist der kürzer ist als der Abstand zwischen der Austrittsöffnung des ersten Luftleitkanals und der Ausblasöffnung der Transportkältemaschine, jedoch größer als der Abstand zwischen der Austrittsöffnung des zweiten Luftleitkanals und der Ausblasöffnung der Transportkältemaschine.

Die Luftleitkanäle können in an sich bekannter Weise aus einem unter das Dach des Kofferaufbaus gespannten Planenmaterial gebildet sein. Dies erlaubt nicht nur eine kostengünstige Herstellung, sondern auch eine einfache bedarfsweise Montage und Demontage.

Um die Entstehung der erfindungsgemäß beabsichtigten Luftwalze im Laderaum eines erfindungsgemäßen Kofferaufbaus zu unterstützen, kann an der Austrittsöffnung mindestens eines der Luftleitkanäle eine Luftleiteinrichtung angeordnet sein, die den aus dem jeweiligen Luftleitkanal austretenden Luftstrom in Richtung der Längsseitenwand leitet, der der Luftleitkanal mit dem kürzesten Abstand zwischen seiner Austrittsöffnung und der Ausblasöffnung der Transportkältemaschine zugeordnet ist.

Besonders zweckmäßig erweist sich die Erfindung dann, wenn die Transportkältemaschine mit ihrer Ausblasöffnung und ihrer optional vorhandenen Absaugöffnung an der Stirnseite des Kofferaufbaus angeordnet ist und sich die Luftleitkanäle in Richtung der Rückwand des Kofferaufbaus längs von dessen Dach erstrecken.

Grundsätzlich können die Luftleitkanäle bei einem erfindungsgemäßen Kofferaufbau jeden beliebigen Verlauf aufweisen, solange die erfindungsgemäßen Maßgaben in Bezug auf die Anordnung ihrer Austrittsöffnungen eingehalten werden. Eine besonders einfach herzustellende und gleichzeitig zweckmäßige Ausgestaltung ergibt sich dabei dann, wenn die Luftleitkanäle parallel zueinander und zu den Längsseitenwänden des Kofferaufbaus verlaufen.

Insbesondere dann, wenn die Ausblasöffnung der Transportkältemaschine an der Stirn- oder der Rückwand des Kofferaufbaus angeordnet ist, kann es im Hinblick auf eine gleichmäßige Durchmischung der Atmosphäre im Laderaum eines erfindungsgemäßen Kofferaufbaus zudem zweckmäßig sein, die Luftleitkanäle bzw. deren Austrittsöffnungen nur in einem bestimmten, enger zu einer der Längsseiten benachbarten Bereich des Dachs anzuordnen, so dass die aus den Luftleitkanälen ausströmende Luft zunächst in Richtung der anderen Längsseite und dann an dieser zurück in Richtung der Ausblasöffnung umgelenkt wird.

Nachfolgend wird die Erfindung anhand einer ein Ausführungsbeispiel darstellenden Zeichnung näher erläutert. Es zeigen jeweils schematisch:

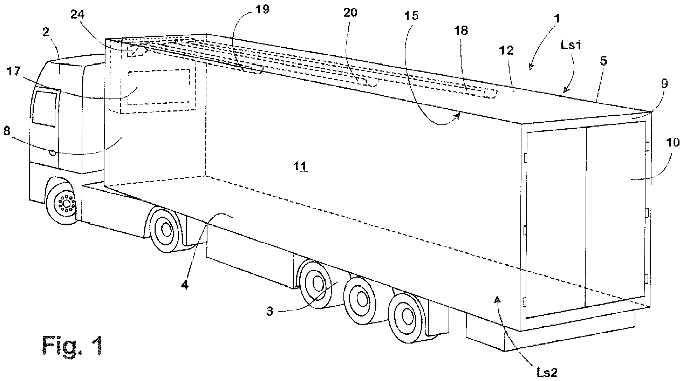

- Fig. 1: ein Nutzfahrzeug in einer perspektivischen Ansicht von hinten;
- Fig. 2: das Nutzfahrzeug in einer Ansicht von oben.

Bei dem in den Figuren dargestellten Nutzfahrzeug 1 handelt es sich um einen Sattelauflieger, der im Gebrauch von einer Zugmaschine 2 gezogen wird. Das Nutzfahrzeug 1 umfasst ein Chassis 3 konventioneller Bauart, an dem in üblicher Weise die Achsen mit den Rädern des Nutzfahrzeugs 1 gelagert sind und das einen Boden 4 trägt, auf dem ein Kofferaufbau 5 errichtet ist.

Der quaderförmige Kofferaufbau 5 umfasst zwei in üblicher Weise als feste Wandpaneele ausgebildete Längsseitenwände 6,7, die sich über die Länge des Nutzfahrzeugs 1 erstrecken und von denen jeweils eine an einer der Längsseiten LS1,LS2 des Nutzfahrzeugs 1 angeordnet ist, eine Stirnwand 8, die die Längsseitenwände 6,7 an der dem Zugfahrzeug 2 zugeordneten, bei normaler Vorwärtsfahrt vorne angeordneten Stirnseite des Nutzfahrzeugs 1 miteinander verbindet, einer Rückwand 9, die an der zur Stirnwand 8 gegenüberliegenden Seite die Längsseitenwände 6,7 miteinander verbindet und eine Türanlage 10, über die der vom Kofferaufbau 5 umgrenzte Laderaum 11 beladen werden kann, und ein Dach 12, das von den Längsseitenwänden 6,7, der Stirnwand 8 und der Rückwand 9 getragen ist.

An der Außenseite 13 der Stirnwand 8 ist in ebenso bekannter Weise eine konventionelle Transportkältemaschine 14 angeordnet, die über eine in einen oberen Abschnitt der Stirnwand 8 eingeformte, in enger Nachbarschaft zu dem Laderaum 11 zugeordneten Unterseite 15 des Dachs 12 angeordnete Ausblasöffnung 16 temperierte Luft in den Laderaum 11 bläst. In Richtung des Bodens 4 versetzt unterhalb der Ausblasöffnung 16 ist in der Stirnwand 8 eine Absaugöffnung 17 angeordnet, über die die Transportkältemaschine 14 aus dem Laderaum 11 Luft absaugt.

An der Unterseite 15 des Dachs 12 sind drei Luftleitkanäle 18,19,20 angeordnet. Die aus unter das Dach 12 gespannten textilem Bahnmaterial gebildeten Luftleitkanäle 18,19,20 erstrecken sich jeweils parallel zueinander und parallel zur Längsachse X des Nutzfahrzeugs 1. Dabei sind ihre der Ausblasöffnung 16 der Transportkältemaschine 14 zugeordneten Eintrittsöffnungen 21,22,23 in einem für alle Luftleitkanäle 18,19,20 gleichen Abstand A zur Ausblasöffnung 16 angeordnet.

Für die Aufteilung des aus der Ausblasöffnung 16 der Transportkältemaschine 14 austretenden Gesamtluftstroms LG ist eine Luftführungseinrichtung 24 vorgesehen, die an der Stirnwand 8 sitzt und mit ihrer Eingangsöffnung die Ausblasöffnung 16 der Transportkältemaschine 14 abdeckt. Durch in der Luftführungseinrichtung 24 ausbildete Luftleitbleche und desgleichen wird der Gesamtluftstrom LG in drei Luftströme L1,L2,L3 geteilt, von denen jeweils einer in einen der Luftleitkanäle 18,19,20 geleitet wird.

Der erste Luftleitkanal 18 ist dabei eng benachbart zur ersten Längsseitenwand 6 des Kofferaufbaus 5 angeordnet. Der zweite Luftleitkanal 19 ist dagegen in Richtung der zweiten Längsseitenwand 7 versetzt zu dem ersten Luftleitkanal 18 nächstbenachbart zur zweiten Längsseitenwand 7 angeordnet, wobei der Abstand zwischen dem zweiten Luftleitkanal 19 und der Längsseitenwand 7 größer ist als der Abstand zwischen dem ersten Luftleitkanal 18 und der zu ihm nächstbenachbarten Längsseitenwand 6. Mittig zwischen den Luftkanälen 18,19 sitzt der dritte Luftleitkanal 20.

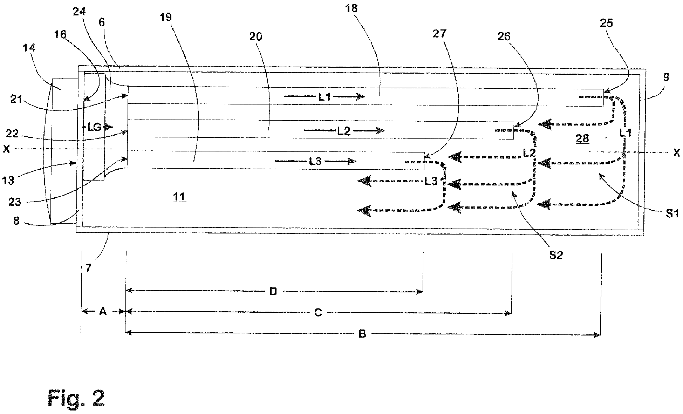

Der Abstand B zwischen der Eintrittsöffnung 21 und der der Rückwand 9 des Kofferaufbaus 5 zugeordneten Austrittsöffnung 25 des zur ersten Längsseitenwand 6 nächstbenachbart angeordneten Luftleitkanals 18 ist größer als der Abstand C der Eintrittsöffnung 22 und der der Rückwand 9 des Kofferaufbaus 5 zugeordneten Austrittsöffnung 26 des in Richtung auf die zweite Längsseitenwand 7 zum Luftleitkanal 18 nächstbenachbart angeordneten Luftleitkanals 20. Der Abstand C zwischen der Eintrittsöffnung 22 und der Austrittsöffnung 26 des Luftleitkanals 20 ist wiederum größer als der Abstand D der Eintrittsöffnung 23 und der ebenfalls der Rückwand 9 des Kofferaufbaus 5 zugeordneten Austrittsöffnung 27 des in Richtung auf die zweite Längsseitenwand 7 zum Luftleitkanal 20 nächstbenachbart angeordneten Luftleitkanals 19. Die Differenz zwischen dem Abstand B und dem Abstand C ist dabei gleich der Differenz zwischen dem Abstand D und dem Abstand C, so dass sich bei Draufsicht auf die Luftleitkanäle 18,19,20 (Fig. 2) eine gleichmäßige Abstufung der Längen der Luftleitkanäle 18,19,20 ergibt.

Im Betrieb tritt der dem längsten Luftleitkanal 18 zugeteilte Luftstrom L1 aus der Austrittsöffnung 25 des Luftleitkanals aus und wird im Zwickel zwischen der Rückwand 9 und der ersten Längsseitenwand 6 in Richtung der zweiten Längsseitenwand 7 umgelenkt, so dass sich im an die Rückwand 9 angrenzenden hinteren Bereich 28 des Laderaums 11 bereits eine in Richtung der Stirnwand 8 gerichtete Strömungswalze S1 ergibt. Der aus der Austrittsöffnung 26 des mittleren Luftleitkanals 20 mit größerem Abstand zur Rückwand 9 austretende Luftstrom L2 trifft auf die Strömungswalze S1 und wird von ihr ebenfalls in Richtung der zweiten Längsseitenwand 7 und der Stirnwand 8 umgelenkt. Genauso ergeht es dem aus der Austrittsöffnung 27 des kürzesten Luftleitkanals 20 mit noch größerem Abstand zur Rückwand 9 austretendem Luftstrom L3, der von der aus dem Luftstrom L1 und dem Luftstrom L2 gebildeten Strömungswalze S2 in Richtung der zweiten Längsseitenwand 7 und der Stirnwand 8 gezwungen wird.

Im Ergebnis wird auf diese Weise eine kräftige in Richtung der Stirnwand 8 gerichtete Rückströmung erzeugt, durch die sichergestellt ist, dass der Laderaum 11 auch dann, wenn in ihm Transportgut dicht gestapelt ist, von der von der Transportkältemaschine 14 eingeblasenen temperierten Luft intensiv durchströmt wird.

Die voranstehend beschriebene Umlenkung der aus den Luftleitkanälen 18,19,20 austretenden Luftströme L1,L2,L3 kann zusätzlich durch nahe der Austrittsöffnungen 25,26,27 angeordnete, hier der Übersichtlichkeit halber nicht gezeigte Luftleitelemente unterstützt werden, die die austretenden Luftströme L1,L2,L3 jeweils in Richtung der zweiten Längsseitenwand 7 lenken.

Die zu der Stirnwand 8 gelangende Luftströmung wird über die Absaugöffnung 17 von der Transportkältemaschine 14 abgesaugt, temperiert und über die Ausblasöffnung 16 erneut in den Laderaum 11 geblasen.

### BEZUGSZEICHEN

- 1: Nutzfahrzeug (Sattelauflieger)
- 2: Zugmaschine
- 3: Chassis des Nutzfahrzeugs 1
- 4: Boden des Nutzfahrzeugs 1
- 5: Kofferaufbau des Nutzfahrzeugs 1
- 6,7: Längsseitenwände des Kofferaufbaus 5
- 8: Stirnwand des Kofferaufbaus 5
- 9: Rückwand des Kofferaufbaus 5
- 10: Türanlage des Kofferaufbaus 5
- 11: Laderaum des Nutzfahrzeugs 1
- 12: Dach des Kofferaufbaus 5
- 13: Außenseite der Stirnwand 8
- 14: Transportkältemaschine
- 15: Unterseite des Dachs 12
- 16: Ausblasöffnung der Transportkältemaschine 14
- 17: Absaugöffnung der Transportkältemaschine 14
- 18,19,20: Luftleitkanäle
- 21,22,23: Eintrittsöffnungen der Luftleitkanäle 18,19,20
- 24: Luftführungseinrichtung
- 25,26,27: Austrittsöffnungen der Luftleitkanäle 18,19,20
- 28: hinterer Bereich des Laderaums 11

- A: Abstand zwischen der Ausblasöffnung 16 der Transportkältemaschine 14 und der Eintrittsöffnungen 21,22,23 der Luftleitkanäle 18,19,20
- B: Abstand zwischen der Eintrittsöffnung 21 und der Austrittsöffnung 25 des Luftleitkanals 18
- C: Abstand der Eintrittsöffnung 22 und der Austrittsöffnung 26 des Luftleitkanals 20
- D: Abstand der Eintrittsöffnung 23 und der Austrittsöffnung 27 des Luftleitkanals 19
- X: Längsachse des Nutzfahrzeugs 1
- LG: Gesamtluftstrom
- LS1,LS2: Längsseiten des Nutzfahrzeugs 1
- L1,L2,L3: Luftströme
- S1,S2: Luft-Strömungswalzen

## Patentansprüche

1. Kofferaufbau eines Nutzfahrzeugs (1), wobei der Kofferaufbau (5) mit einem Dach (12), mit zwei das Dach (12) tragenden, sich in Längsrichtung des Kofferaufbaus (5) erstreckenden Längsseitenwänden (6,7), mit einer die Längsseitenwände (6,7) in einem Stirnseitenbereich des Kofferaufbaus (5) verbindenden Stirnwand (8) und mit einer die Längsseitenwände (6,7) an einem Rückseitenbereich des Kofferaufbaus (5) verbindenden Rückwand (9) einen Laderaum (11) umgrenzt, wobei an dem Kofferaufbau (5) eine Transportkältemaschine (14) vorgesehen ist, die über eine Ausblasöffnung (16) temperierte Luft in den Laderaum (11) bläst, und wobei an der dem Laderaum (11) zugeordneten Unterseite (15) des Dachs (12) mindestens zwei Luftleitkanäle (18,19,20) angeordnet sind, deren Eintrittsöffnungen (21,22,23) der Transportkältemaschine (14) zugeordnet sind und deren Austrittsöffnung (25,26,27) in Längsrichtung des Laderaums (11) in einem Abstand (B,C,D) entfernt von der Transportkältemaschine (14) angeordnet sind, um temperierte Luft in einen von der Ausblasöffnung der Transportkältemaschine (14) entfernten Bereich (28) des Laderaums (11) zu leiten, **dadurch gekennzeichnet, dass** ausgehend von einem ersten Luftleitkanal (18), dessen Austrittsöffnung (25) den größten Abstand (B) zur Ausblasöffnung (16) der Transportkältemaschine (14) hat, bei jedem in Richtung einer ersten der Längsseitenwände (6,7) zu einem der Luftleitkanäle (18,19,20) benachbart angeordneten Luftleitkanal (19,20) die Austrittsöffnung (26,27) jeweils in einem kürzeren Abstand (C,D) zur Ausblasöffnung (16) der Transportkältemaschine (14) angeordnet ist als die Austrittsöffnung (25,26) des in Richtung der zweiten Längsseitenwand (6) zu ihm benachbarten Luftleitkanals (18,19).

2. Kofferaufbau nach Anspruch 1, **dadurch gekennzeichnet, dass** die Transportkältemaschine (14) eine Absaugöffnung (17) aufweist, die benachbart zu der Ausblasöffnung (16) der Transportkältemaschine (14) in dem Laderaum (11) angeordnet ist.

3. Kofferaufbau nach Anspruch 2, **dadurch gekennzeichnet, dass** die Absaugöffnung (17) und die Ausblasöffnung (16) der Transportkältemaschine (14) in einer Wandfläche des Kofferaufbaus (5) vorgesehen sind.

4. Kofferaufbau nach einem der Ansprüche 2 oder 3, **dadurch gekennzeichnet, dass** die Ausblasöffnung (16) in einem kleineren Abstand zum Dach (12) des Kofferaufbaus (5) angeordnet ist als die Absaugöffnung (17).

5. Kofferaufbau nach einem der voranstehenden Ansprüche, **dadurch gekennzeichnet, dass** der Abstand (A) der Eintrittsöffnungen (21,22,23) der Luftleitkanäle (18,19,20) zur Ausblasöffnung (16) der Transportkältemaschine (14) für alle Luftleitkanäle (18,19,20) gleich ist.

6. Kofferaufbau nach einem der voranstehenden Ansprüche, **dadurch gekennzeichnet, dass** der Abstand (B,C,D)der Austrittsöffnungen (25,26,27) der Luftleitkanäle (18,19,20) von der Ausblasöffnung (16) der Transportkältemaschine (14) in einer gleichmäßigen Stufung abnimmt.

7. Kofferaufbau nach einem der voranstehenden Ansprüche, **dadurch gekennzeichnet, dass** drei Luftleitkanäle (18,19,20) vorgesehen sind, von denen der erste Luftleitkanal (18) den größten Abstand (B) zwischen seiner Austrittsöffnung (25) und der Ausblasöffnung (16) der Transportkältemaschine (14), der nächstbenachbart zur zweiten Längsseitenwand (7) angeordnete zweite Luftleitkanal (19) den kürzesten Abstand (D) zwischen seiner Austrittsöffnung (27) und der Ausblasöffnung (16) der Transportkältemaschine (14) und der zwischen dem ersten Luftleitkanal (18) und dem zweiten Luftleitkanal (19) angeordnete dritte Luftleitkanal (20) einen Abstand (C) zwischen seiner Austrittsöffnung (26) und der Ausblasöffnung (16) der Transportkältemaschine (14) aufweist, der kürzer ist als der Abstand (C) zwischen der Austrittsöffnung (25) des ersten Luftleitkanals (18) und der Ausblasöffnung (16) der Transportkältemaschine (14), jedoch größer als der Abstand (D) zwischen der Austrittsöffnung (27) des zweiten Luftleitkanals (19) und der Ausblasöffnung (16) der Transportkältemaschine (14).

8. Kofferaufbau nach einem der voranstehenden Ansprüche, **dadurch gekennzeichnet, dass** die Luftleitkanäle (18,19,20) aus einem unter das Dach (12) des Kofferaufbaus (5) gespannten Planenmaterial gebildet sind.

9. Kofferaufbau nach einem der voranstehenden Ansprüche, **dadurch gekennzeichnet, dass** an der Austrittsöffnung (25,26,27) mindestens eines der Luftleitkanäle (18,19,20) eine Luftleiteinrichtung angeordnet ist, die den aus dem jeweiligen Luftleitkanal (18,19,20) austretenden Luftstrom in Richtung der Längsseitenwand (7) leitet, die dem Luftleitkanal (19) mit dem kürzesten Abstand (D) zwischen seiner Austrittsöffnung (27) und der Ausblasöffnung (16) der Transportkältemaschine (14) zugeordnet ist.

10. Kofferaufbau nach einem der voranstehenden Ansprüche, **dadurch gekennzeichnet, dass** die Transportkältemaschine (14) mit ihrer Ausblasöffnung an der Stirnseite des Kofferaufbaus (5) angeordnet ist und dass sich die Luftleitkanäle (18,19,20) in Richtung der Rückwand (9) des Kofferaufbaus (5) längs von dessen Dach (12) erstrecken.

11. Kofferaufbau nach einem der voranstehenden Ansprüche, **dadurch gekennzeichnet, dass** die Luftleitkanäle (18,19,20) parallel zueinander und zu den Längsseitenwänden (6,7) des Kofferaufbaus (5) verlaufen.

12. Kofferaufbau nach einem der voranstehenden Ansprüche, **dadurch gekennzeichnet, dass** der Luftleitkanal (18) mit dem größten Abstand (B) zwischen seiner Eintrittsöffnung (21) und seiner Austrittsöffnung (26) nächstbenachbart zu einer der Längsseitenwände (6,7) angeordnet ist.
